Europäisches Patentamt

(19) European Patent Office                    (11) Publication number: **0 240 064**
**B1**
Office européen des brevets

(12)                                    **EUROPEAN PATENT SPECIFICATION**

(45) Date of publication of the patent specification:          (51) Int. Cl.⁵: **B01D 53/36**
**13.06.90**

(21) Application number: **87200513.7**

(22) Date of filing: **19.03.87**

(54) A method for the removal of TiCl4-vapour from gas-streams.

(30) Priority: **27.03.86  GB 8607696**

(43) Date of publication of application:
**07.10.87 Bulletin 87/41**

(45) Publication of the grant of the patent:
**13.06.90 Bulletin 90/24**

(84) Designated Contracting States:
**BE DE FR GB IT NL**

(56) References cited:
**US-A- 4 209 496**

(73) Proprietor: **SHELL INTERNATIONALE RESEARCH MAATSCHAPPIJ B.V., Carel van Bylandtlaan 30, NL-2596 HR Den Haag(NL)**

(72) Inventor: **Reman, Willem George, Badhuisweg 3, NL-1031 CM Amsterdam(NL)**

(74) Representative: **Aalbers, Onno et al, P.O. Box 302, NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method for the removal of TiCl$_4$-vapour from gas-streams.

The presence of TiCl$_4$ in gas-streams, such as waste gas-streams, poses an important problem, when these gases are emitted in the atmosphere. In the literature several methods for the removal of TiCl$_4$-vapour have been described.

In the US patent specification 2 682 930 has been described a method for separating and recovering TiCl$_4$ from a residual gas mixture with the aid of an adsorbent. The TiCl$_4$ is recovered uncompletely by distillation, but the used temperatures are high and this step is carried out under anhydrous conditions. However, the US patent specification 2 682 930 does not deal with the problem of titanium tetrachloride emissions in the atmosphere or with problems relating to reactions of titanium tetachloride in gas-streams with oxygen containing compounds in the apparatus.

In the US patent specification 4 474 587 has been described a process for the treatment of waste gas, wherein activated carbon is used to adsorb the TiCl$_4$ in the waste gas. A disadvantage of carbon is that after a partly recovery of TiCl$_4$ from the carbon, the latter still contains a great deal of reactive TiCl$_4$ which must still be destroyed and neutralized.

In the USSR patent specification 990 273 has been described a method for the removal of TiCl$_4$-vapour from industrial waste gases by passage over a porous sorbent coated with metallic copper. Regeneration of the sorbent is complicated.

It is also known to treat TiCl$_4$-vapour containing waste gas with an aqueous calcium hydroxide solution, followed by an aqueous sodium hydroxide solution (see the US patent specification 4 474 587). Applicant has found that when using a caustic scrubber in the removal of TiCl$_4$-vapour an acidic mist in the scrubber overheads system is formed, pipelines are plugged and operational problems exist.

In the US patent specification 4 157 374 is disclosed a process for the purification of waste gases, containing up to 15% by weight of gaseous metal chlorides by passing the waste gases through a bed of activated carbon to remove the metal chlorides, passing stripping gas through the bed and passing stripping gas and entrained gaseous metal chlorides through a bed of metal oxides of the groups IIA, IIIA, IVA or IVB while contacting the gases with water vapour. Hydrogen chloride from the feed gas and liberated by hydrolysis of metal chlorides, is absorbed in water. The process is costly because of the expense of heat and gases needed to generate the carbon adsorbers and the need to replace spent activated carbon (see the description in US patent specification 4 209 496).

In the US patent specification 4 209 496 is disclosed an improved process for treating waste gases, however no mention is made that the bed of metal oxides can be regenerated.

Applicant has now found a method for the removal of TiCl$_4$-vapour from gas-streams which comprises conducting under anhydrous conditions a gasstream over a bed of a solid metal oxide containing hydroxyl groups, while adsorbing the TiCl$_4$ on the solid material under liberation of hydrogen chloride and then regenerating and reusing the solid material characterized by a regeneration with water or steam to form new hydroxyl groups on the solid metal oxide under liberation of hydrogen chloride.

The regeneration of the solid material is carried out with water or steam, e.g. at a temperature between 120 °C and 250 °C.

The gaseous TiCl$_4$ in the gas under anhydrous conditions reacts with the hydroxyl groups of the solid material under liberation of hydrogen chloride. The solid material is a metal oxide. Numerous metal oxides, even after calcining, contain still hydroxyl groups on their surface. Examples are alumina, silica and titanium dioxide. The TiCl$_4$ is bound via O-atoms with the metal oxide surface, but still Cl-atoms remain, which latter will react with water or steam to form again hydroxyl groups under liberation of hydrogen chloride. At this stage the solid material is regenerated.

When water or steam is added at the same time that TiCl$_4$ is conducted over the solid material rapid plugging of the solid material bed occurs and pressure drop takes place and makes the process unsuitable to be further carried out.

The adsorbent is preferably the spent silica based titanium dioxide catalyst for the reaction of propylene with ethylbenzene hydroperoxide to prepare propylene oxide and alpha-phenyl ethanol.

The method according to the invention has the advantage that the solid material containing hydroxyl groups can be regenerated and reused a number of times, e.g. ten times, but more times are not excluded. The method has moreover the advantage that no mist is formed and no plugging occurs.

The gas-streams which have been conducted through a bed of solid material containing hydroxyl groups may further be conducted through water, preferably through a basic aqueous solution in order to dissolve and neutralize the liberated hydrogen chloride. The gas-streams containing neither TiCl$_4$ nor hydrogen chloride may be emitted into the atmosphere.

In an integrated process the hydroxyl groups containing material is a guard bed installed between the vessel where the TiCl$_4$ containing gas is produced and the caustic scrubber where the acidic components are collected, before the gas may be emitted in the atmosphere. The guard bed prevents the formation of mist and solids in the caustic scrubber. The guard bed is easy to operate.

Generally the absorption of the TiCl$_4$ takes place at atmospheric pressure or superatmospheric pressure.

The temperature at which the absorption takes place may range from room temperature 20 °C up to 300 °C, preferably a temperature between 100 °C and 250 °C.

## Example

A gas-stream containing TiCl$_4$-vapour and nitro-

gen was made by leading nitrogen gas through a flask containing liquid TiCl₄. The N₂-flow containing TiCl₄-vapour was conducted through a guard bed of 110 ml at a temperature of 200 °C and further led into a one metre long packed glass scrubbing column, at the top of which water flowed down which was collected at the bottom and again recycled to the top of the column. The guard bed consisted of spent titanium dioxide catalyst on silica. 40 litres of nitrogen loaded with in total 2 g TiCl₄ were passed through the guard bed before a dense mist appeared, indicating a TiCl₄ breakthrough of the bed.

The experiment was repeated, but just before the breakthrough could take place, the nitrogen flow was halted. In one hour 40 ml water in the form of steam were passed through the guard bed at 200 °C, after which the bed was stripped with dry pure nitrogen for 30 min.

Again 38 litres of nitrogen containing 2 g TiCl₄ could be passed over the guard bed. 40 ml water in the form of steam was then passed through the guard bed, after which the bed was stripped with dry nitrogen again.

The procedure was repeated, but the absorption of the TiCl₄ was stopped after 35 litres of nitrogen loaded with TiCl₄-vapour had been led over the guard bed, before regenerating.

The test was ended after 14 cycles of loading and regeneration, without having observed the occurrence of mist in the scrubber at any time. After drying it appeared that the 110 ml guard bed (weight 46 g) had gained 12 g in weight.

## Claims

1. A method for the removal of TiCl₄-vapour from gas-streams which comprises conducting under anhydrous conditions a gas-stream over a bed of a solid metal oxide containing hydroxyl groups, while adsorbing the TiCl₄ on the solid material under liberation of hydrogen chloride and then regenerating and reusing the solid material characterized by a regeneration with water or steam to form new hydroxyl groups on the solid metal oxide under liberation of hydrogen chloride.

2. A method as claimed in claim 1, wherein the absorption of TiCl₄ is carried out at a temperature from 20 °C to 300 °C.

3. A method as claimed in claim 1 or 2, wherein the regeneration is carried out with steam at a temperature between 120 °C and 250 °C.

4. A method as claimed in one or more of the claims 1–3, wherein the solid material is spent silica based titanium dioxide catalyst.

5. A method as claimed in one or more of the claims 1–4, wherein the gas-streams containing hydrogen chloride are conducted through water after leaving the bed of solid material.

6. A method as claimed in claim 5, wherein the gas-streams are conducted through a basic aqueous solution.

## Patentansprüche

1. Ein Verfahren zur Entfernung von TiCl₄-Dampf aus Gasströmen, welches das Leiten eines Gasstromes über ein Bett eines Hydroxylgruppen enthaltenden festen Metalloxids unter wasserfreien Bedingungen, während das TiCl₄ an dem festen Material unter Freisetzung von Chlorwasserstoff adsorbiert wird, und anschließend das Regenerieren und Wiederverwenden des festen Materials umfaßt, gekennzeichnet durch eine Regeneration mit Wasser oder Wasserdampf zwecks Bildung neuer Hydroxylgruppen an dem festen Metalloxid unter Freisetzung von Chlowasserstoff.

2. Ein Verfahren wie in Anspruch 1 beansprucht, in welchem die Absorption von TiCl₄ bei einer Temperatur im Bereich von 20°C bis 300°C durchgeführt wird.

3. Ein Verfahren wie in Anspruch 1 oder 2 beansprucht, in welchem die Regeneration mit Wasserdampf bei einer Temperatur zwischen 120°C und 250°C durchgeführt wird.

4. Ein Verfahren wie in einem der Ansprüche 1 bis 3 beansprucht, in welchem das feste Material ein verbrauchter Titandioxidkatalysator auf der Basis von Siliciumdioxid ist.

5. Ein Verfahren wie in einem der Ansprüche 1 bis 4 beansprucht, in welchem die Chlorwasserstoff enthaltenden Gasströme nach dem Verlassen des Bettes des festen Materials durch Wasser geleitet werden.

6. Ein Verfahren wie in Anspruch 5 beansprucht, in welchem die Gasströme durch eine basische wäßrige Lösung geleitet werden.

## Revendications

1. Un procédé pour éliminer des vapeurs de TiCl₄ de courants gazeux, qui comprend le passage dans des conditions anhydres d'un courant gazeux sur un lit d'un oxyde métallique solide contenant des groupes hydroxyle, avec adsorption de TiCl₄ sur la matière solide et libération de chlorure d'hydrogène, et ensuite la régénération et la réutilisation de la matière solide, caractérisé par une régénération au moyen d'eau ou de vapeur d'eau de manière à former de nouveaux groupes hydroxyle sur l'oxyde métallique solide avec libération de chlorure d'hydrogène.

2. Un procédé selon la revendication 1, dans lequel l'absorption de TiCl₄ est effectuée à une température comprise entre 20°C et 300°C.

3. Un procédé selon la revendication 1 ou 2, dans lequel la régénération est effectuée à une température comprise entre 120°C et 250°C.

4. Un procédé selon une ou plusieurs des revendications 1–3, dans lequel la matière solide est un catalyseur bioxyde de titane sur silice usé.

5. Un procédé selon une ou plusieurs des revendications 1–4, dans lequel les courants gazeux contenant du chlorure d'hydrogène sont passés à travers de l'eau après avoir quitté le lit de matière solide.

6. Un procédé selon la revendication 5, dans lequel les courants gazeux sont passés à travers une solution aqueuse basique.